# EUROPÄISCHE PATENTANMELDUNG

(11) **EP 0 949 040 A1**
(43) Veröffentlichungstag der Anmeldung: **13.10.1999**
(21) Anmeldenummer: 99106836.2
(22) Anmeldetag: 06.04.1999
(51) Int. Cl.: B23K 35/38, B23K 103/10

(54) **Schutzgas zum MIG/MAG-Schweissen von Aluminium**

(30) Priorität: 08.04.1998 DE 19815905; 15.07.1998 DE 19831834
(71) Anmelder: Linde Aktiengesellschaft, 65189 Wiesbaden (DE)
(72) Erfinder: Trube, Stefan Dr.-Ing., 81669 München (DE)
(74) Vertreter: Obermüller, Bernhard

(57) **Zusammenfassung**

Die Erfindung betrifft ein Schutzgas und ein Verfahren zum MIG- oder MAG-Schweißen von Aluminiumwerkstoffen und Aluminiumlegierungen, wobei ein Schutzgas der Schweißstelle zugeführt wird und wobei das Schutzgas zumindest Argon, Helium oder ein Gemisch aus Argon und Helium enthält.

Erfindungsgemäß werden gute Schweißergebnisse mit einem Schutzgas erzielt, welches neben Argon und/oder Helium zumindest einen Anteil von 300 vpm bis 1000 vpm Stickstoff enthält.

In Ausgestaltung der Erfindung enthält das Schutzgas zwischen 350 vpm und 650 vpm Stickstoff. Das Schutzgas weist bevorzugt 1 bis 75 Vol.-% Helium auf. Dem Schutzgas können als aktive Komponenten 0,01 bis 1 Vol.-% Sauerstoff, Kohlendioxid oder einer Mischung aus Sauerstoff und Kohlendioxid zugemischt sein.

## Beschreibung

Die Erfindung betrifft ein Schutzgas zum MIG- oder MAG-Schweißen von Aluminiumwerkstoffen umfassend Argon, Helium oder ein Gemisch aus Argon und Helium. Die Erfindung betrifft außerdem ein Verfahren zum MIG- oder MAG-Schweißen von Aluminiumwerkstoffen, wobei ein Schutzgas der Schweißstelle zugeführt wird und wobei das Schutzgas Argon, Helium oder ein Gemisch aus Argon und Helium enthält.

Die Abkürzungen MIG und MAG werden in Fachkreisen für das Metall-Inert-Gas-Schweißverfahren und das Metall-Aktiv-Gas-Schweißverfahren benützt. Darunter werden üblicherweise Schweißverfahren mit einer abschmelzenden oder abbrennenden Elektrode unter Einsatz eines Inert- oder Aktivgases verstanden. Die abschmelzende Elektrode besteht im allgemeinen aus einem Draht. Im Zusammenhang mit der vorliegenden Erfindung wird unter einem MIG- oder MAG-Schweißverfahren jedes Schweißverfahren mit abschmelzender Elektrode verstanden. Üblicherweise brennt dabei der Lichtbogen frei zwischen der Drahtelektrode und dem Werkstück.

Unter Aluminiumwerkstoffen werden im Rahmen der vorliegenden Erfindung alle bekannten Aluminiumwerkstoffe (in weiterem Sinne) verstanden, insbesondere auch Aluminium und/oder Aluminiumlegierungen. Auch das Verschweißen unterschiedlicher Aluminiumwerkstoffe soll mit der Erfindung umfaßt werden.

Aluminium setzt sich als Konstruktionswerkstoff immer stärker gegenüber Stahl durch. Dies liegt zu einem wesentlichen Teil an der Gewichtseinsparung, die eine Verwendung von Aluminium an Stelle von Stahlwerkstoffen ermöglicht.

Es sind einige Verfahrensvarianten des MIG- oder MAG-Schweißens unter Einsatz der erwähnten Schutzgasgemische bekannt. Die Besonderheit des Schweißens von Aluminium resultiert aus der Eigenschaft des Aluminiums, an der Oberfläche sofort eine Oxidschicht zu bilden. Die Bildung eines festhaftenden Oxids an der Oberfläche ist Folge des unedlen Charakters von Aluminium. Das Schweißschutzgas hat die Aufgabe, die Strecke des elektrischen Lichtbogens zwischen Elektrode und Werkstück elektrisch leitend zu machen und sowohl das Schweißbad wie auch den abschmelzenden Drahtelektrode gegen die Atmosphäre zu schützen und eine ungewollte Oxidation zu verhindern. Argon ist das dabei am meisten verwendete Schutzgas. Argon-Helium-Gasgemische können trotz der an sich höheren Gaskosten von Vorteil sein. Dies liegt am Bestandteil Helium, der bessere Einbrandverhältnisse und höhere Schweißgeschwindigkeiten ermöglicht. Außerdem kann Helium zur Verminderung oder zur Vermeidung von Poren beitragen und zu einer besseren Nahtgeometrie (breitere und flachere Naht, tieferer und runderer Einbrand) führen. Diese Vorteile von Helium im Vergleich zu Argon erklären sich durch den heißeren Lichtbogen und die günstigere Energieverteilung im Lichtbogen.

In jüngerer Zeit wurden dotierte Schutzgasgemische mit Zumischungen von weiteren Komponenten im vpm-Bereich bekannt.

Aus der DE 27 48 417 C2 ist ein Verfahren zur Verringerung von beim Schweißen gebildeten gesundheitsschädlichen Ozons durch Zugabe von 25 bis 50 vpm Stickoxid zu dem als Schutzgas verwendeten Argon beim WIG-Schweißen, aber auch beim MIG-und MAG-Schweißen bekannt.

Aus der DE 40 28 074 C1 bzw. der korrespondierenden EP 0 475 030 B1 ist bekannt, ein inertes Schutzgas aus Argon oder aus einem Argon-Helium-Gemisch mit einer Beimischung von 80 bis 250 vpm, vorzugsweise 120 bis 180 vpm mit einem Optimum bei 150 vpm Stickstoff, beim WIG-, MIG- und MAG-Schweißen von Aluminium einzusetzen. Beim MIG-Schweißen ergibt sich ein sehr ruhiger Werkstoffübergang mit dem Ergebnis, daß die Nähte äußerst blank bleiben, ein verbessertes sehr glattes Nahtflankenanfließen und eine Intensivierung des Einbrands. Oberhalb von 250 vpm Stickstoff treten störende Nebeneffekte wie Nahtverfärbungen (WIG-Schweißen) und ein Absacken der Kehlnähte (MIG-Schweißen) auf.

In der DE 41 06 900 A1 bzw. der korrespondierenden EP 0 502 318 B1 ist ein Schutzgasgemisch aus Argon oder einer oder mehreren Komponenten aus der Gruppe Helium, Wasserstoff, Sauerstoff und Kohlendioxid mit einer Beimischung von 80 bis 250 vpm Stickstoff, vorzugsweise 120 bis 180 vpm Stickstoff, bekannt, welches beim WIG-, MIG-, MAG- und Plasmaschweißen von Stahlwerkstoffen, Kupfer, Nickel und Aluminium eingesetzt werden kann. Das Schutzgas führt zu einer Einbrandintensivierung ohne Verschlechterung des Zwangslagenverhaltens.

Aus der DE 42 41 982 C1 bzw. der korrespondierenden EP 0 673 295 B1 ist bekannt, ein Schutzgas aus Argon oder aus einem Argon-Helium-Gemisch mit einer Beimischung von 80 bis 250 vpm Distickstoffoxid (Lachgas), vorzugsweise 120 bis 180 vpm Distickstoffoxid (mit einem Optimum um 150 vpm N₂O) beim WIG- und MIG-Schweißen von Aluminium einzusetzen. Beim MIG-Schweißen ergibt sich ein sehr ruhiger Werkstoffübergang mit dem Ergebnis, daß die Nähte äußerst blank bleiben, ein verbessertes sehr glattes Nahtflankenanfließen und eine Intensivierung des Einbrands. Oberhalb von 250 vpm Distickstoffoxid treten störende Nebeneffekte wie Nahtverfärbungen (WIG-Schweißen) und ein starkes Durchsacken der Kehlnähte (MIG-Schweißen) auf.

In der DE 42 41 983 C1 bzw. der korrespondierenden EP 0 673 296 B1 ist ein inertes Schutzgas aus Argon oder aus einem Argon-Helium-Gemisch mit einer Beimischung von 80 bis 250 vpm N₂/N₂O, vorzugsweise 120 bis 180 vpm mit einem Optimum bei 150 vpm N₂/N₂O, beim WIG-, MIG- und MAG-Schweißen von Aluminium einzusetzen. Die Anteile von N₂ und N₂O im Schutzgas können im beliebigen Verhältnis stehen. Beim MIG-Schweißen ergibt sich ein sehr ruhiger Werkstoffübergang mit dem Ergebnis, daß die Nähte äußerst blank bleiben, ein verbessertes sehr glattes Nahtflankenanfließen und eine Intensivierung des Einbrands. Oberhalb von 250 vpm N₂/N₂O treten störende Nebeneffekte wie Nahtverfärbungen (WIG-Schweißen) und ein Absacken der Kehlnähte (MIG-Schweißen) auf.

Aus der EP 0 761 380 A1 bzw. der korrespondierenden US-A-5 667 703 ist ein Verfahren zum WIG-Wechselstromschweißen von Aluminium und Aluminiumlegierungen bekannt, bei welchem der Schweißstelle ein ternäres Schutzgasgemisch aus wenigstens 50 Vol.-% Helium, über 300 vpm Stickstoff und Argon als Rest (bevorzugt wenigstens 60 Vol.-% Helium, zwischen 300 und 1000 vpm Stickstoff und restlich Argon) zugeführt wird. Ausgehend von der Tatsache, daß Helium im Schutzgas einerseits die Umschaltung der Polung der Wolframelektrode von Emission auf Empfang aufgrund seiner gegenüber Argon geringen Förderung der Gasionisation erschwert, aber andererseits die Wirksamkeit des WIG-Schweißens von Aluminium fördert, nämlich vor allem die Eindringtiefe heim Schweißen und die Kompaktheit der Schweißraupe vergrößert, soll durch diese vorgeschlagene Schutzgasmischung die positive Wirkung des Helium ausgenutzt werden, ohne daß die Lichtbogenstabilität oder die Schweißrate merklich beeinflußt wird.

In dem deutschen Gebrauchsmuster DE 296 23 194 U1 ist ein Schutzgas zum Lichtbogenschweißen (WIG-Wechselstromschweißen, MIG-Schweißen und Pulverplasmaschweißen) von Stahl und Nichteisenwerkstoffen wie Aluminium beschrieben, welches aus Argon oder einem Argon-Helium-Stickstoff- und gegebenenfalls Wasserstoff-Gemisch mit einer Beimischung zwischen 50 und 450 vpm Stickstoffmonoxid (vorzugsweise 280 bis 320 vpm NO) besteht. Eine konkret angegebene Zusammensetzung dieses Schutzgasgemisches umfaßt 150 vpm Stickstoff, 300 vpm Stickstoffmonoxid, 10 Vol.-% Helium und Argon als Rest. Das Schutzgas soll beim MIG-Schweißen einen stabilen ruhigen Lichtbogen mit dem Ergebnis, daß die Nähte äußerst blank bleiben, daß die Schweißgeschwindigkeit durch die höhere Energieeinbringung erhöht werden kann und daß sich die Naht in ihrem Aussehen sehr feinschuppig darstellt. Außerdem ergeben sich glatte Nahtflanken.

Der vorliegenden Erfindung liegt die Aufgabe zugrunde, eine Alternative zu den bekannten Schutzgasen und zugehörigen Schweißverfahren aufzuzeigen, die zu guten Schweißergebnissen führt. Dabei sollten gute Schweißeigenschaften und insbesondere sollten spritzerfreie Schweißnähte höchster Qualität gewährleistet werden. Daneben sollte möglichst ein stabiler und ruhiger Lichtbogen mit hohem Energieeintrag, ein hervorragendes Einbrandprofil, eine Schweißnaht insbesondere ohne Poren und/oder eine hohe Schweißgeschwindigkeit erreicht werden.

Diese Aufgabe wird erfindungsgemäß dadurch gelöst, daß das Schutzgas neben Argon und/oder Helium zumindest einen Anteil von 300 vpm bis 1000 vpm Stickstoff enthält.

Überraschenderweise hat sich nämlich gezeigt, daß ein Schutzgas, welches neben Argon und/oder Helium zumindest einen Anteil von 300 vpm bis 1000 vpm Stickstoff (d.h. zwischen 0,03 und 0,10 Vol.-% N₂) enthält, zu hervorragenden Schweißergebnissen führt. Insbesondere kann das sehr störende Auftreten von Spritzern vermieden werden. Ferner lassen sich ein stabiler und ruhiger Lichtbogen bei hoher Schweißrate und sehr guten Einbrandverhältnisse erzielen. Ein Absacken der Kehlnähte wurde nicht beobachtet. Vielmehr können mit Hilfe der Erfindung Kehlnähte, aber auch Stumpfnähte hoher Güte hergestellt werden.

In Ausgestaltung der Erfindung enthält das Schutzgas zwischen 350 vpm und 650 vpm, bevorzugt zwischen 380 und 550 vpm Stickstoff.

Helium im Schutzgas unterstützt die Vermeidung von Bindefehlem und die Porenbildung. Andererseits verteuert Helium das Schutzgas. Mit Vorteil kann daher das Schutzgas 1 bis 75 Vol.-%, bevorzugt 10 bis 50 Vol.-%, besonders bevorzugt 15 bis 40 Vol.-% Helium enthalten.

Dem Schutzgas können auch aktive Komponenten, insbesondere Sauerstoff und/oder Kohlendioxid, zugemischt sein. Dadurch kann die Schweißqualität zusätzlich erhöht werden. Insbesondere kann eine höhere Reinigungswirkung und/oder ein verbesserter (vor allem tieferer) Einbrand erzielt werden. Hierzu kann das Schutzgas vorteilhafterweise 0,01 bis 1 Vol.-%, vorzugsweise 0,01 bis 0,2 Vol.-%, besonders bevorzugt 0,01 bis 0,1 Vol.-% Sauerstoff, Kohlendioxid oder einer Mischung aus Sauerstoff und Kohlendioxid enthalten. Hervorragende Ergebnisse wurden beispielsweise mit 500 vpm Sauerstoff, mit 500 vpm Kohlendioxid und mit einer Zumischung von 300 vpm Sauerstoff und 200 vpm Kohlendioxid erzielt. Vor allem die Zugabe von Sauerstoff wirkt sich positiv auf das Schweißergebnis und die Qualität aus.

Das erfindungsgemäße Schutzgas kann beispielsweise beim Anwender vor Ort gemischt werden (auch ein Mischen mit mehreren Stufen ist möglich) oder als Fertiggemisch geliefert werden.

Im erfindungsgemäßen Verfahren kann grundsätzlich jede geeignete Stromquelle Verwendung finden. Insbesondere können thyristorgeregelte oder bevorzugt transistorisierte Stromquellen benutzt werden.

Vor dem Schweißen kann ein Bürsten der Oberfläche vorgesehen sein. Durch diese Maßnahme kann insbesondere eine glatte Nahtoberfläche erreicht werden.

Im Rahmen der Erfindung kommen grundsätzlich alle bekannten Lichtbogenarten in Betracht. Insbesondere ergeben sich Vorteile beim Schweißen mit Impulslichtbogen, nämlich ein höherer Wärmeeintrag und die Möglichkeit, dickere Drahtelektroden zu verwenden.

Das erfindungsgemäße Schweißverfahren kann beim Schweißen unter mechanisierter Brennerführung oder unter Schweißbrennerführung von Hand angewendet werden.

Die Erfindung eignet sich zum Schweißen in allen Lagen, unter anderem auch für das Schweißen in Zwangslage.

Die Erfindung wurde beispielsweise an den Werkstoffen AlMgSi1 bzw. AlMg3Mn mit dem Zusatzwerkstoff S-AlSi5 angewendet.

## Patentansprüche

1. Schutzgas zum MIG- oder MAG-Schweißen von Aluminiumwerkstoffen umfassend Argon, Helium oder ein Gemisch aus Argon und Helium,
**dadurch gekennzeichnet**, daß das Schutzgas neben Argon und/oder Helium zumindest einen Anteil von 300 vpm bis 1000 vpm Stickstoff enthält.

2. Schutzgas nach Anspruch 1, dadurch gekennzeichnet, daß das Schutzgas zwischen 350 vpm und 650 vpm Stickstoff enthält.

3. Schutzgas nach Anspruch 1 oder 2, dadurch gekennzeichnet, daß das Schutzgas 1 bis 75 Vol.-% Helium enthält.

4. Schutzgas nach Anspruch 3, dadurch gekennzeichnet, daß das Schutzgas 10 bis 50 Vol.-% Helium enthält.

5. Schutzgas nach einem der Ansprüche 1 bis 4, dadurch gekennzeichnet, daß das Schutzgas 0,01 bis 1 Vol.-% Sauerstoff, Kohlendioxid oder einer Mischung aus Sauerstoff und Kohlendioxid enthält.

6. Verfahren zum MIG- oder MAG-Schweißen von Aluminiumwerkstoffen, wobei ein Schutzgas der Schweißstelle zugeführt wird und wobei das Schutzgas Argon, Helium oder ein Gemisch aus Argon und Helium enthält,
**dadurch gekennzeichnet**, daß das Schutzgas neben Argon und/oder Helium zumindest einen Anteil von 300 vpm bis 1000 vpm Stickstoff enthält.

7. Verfahren nach Anspruch 6, dadurch gekennzeichnet, daß das Schutzgas zwischen 350 vpm und 650 vpm Stickstoff enthält.

8. Verfahren nach Anspruch 6 oder 7, dadurch gekennzeichnet, daß das Schutzgas 1 bis 75 Vol.-% Helium enthält.

9. Verfahren nach Anspruch 8, dadurch gekennzeichnet, daß das Schutzgas 10 bis 50 Vol.-% Helium enthält.

10. Verfahren nach einem der Ansprüche 6 bis 9, dadurch gekennzeichnet, daß das Schutzgas 0,01 bis 1 Vol.-% Sauerstoff, Kohlendioxid oder einer Mischung aus Sauerstoff und Kohlendioxid enthält.
